# FASCICULE DE BREVET EUROPEEN

(11) **EP 0 810 944 B1**
(45) Date de publication et mention de la délivrance du brevet: **28.08.2002**
(21) Numéro de dépôt: 96941704.7
(22) Date de dépôt: 05.12.1996
(51) Int. Cl.: B62K 25/02

(54) **AXE DE BLOCAGE RAPIDE DESTINE A ETRE UTILISE SUR UN CYCLE**
SCHNELLSPANNACHSE FÜR EIN FAHRRAD
RAPID LOCKING PIN FOR USE ON A CYCLE

(30) Priorité: 08.12.1995 FR 9515020
(43) Date de publication de la demande: 10.12.1997
(73) Titulaire: MAVIC S.A., 01990 Saint-Trivier sur Moignans (FR)
(72) Inventeur: MERCAT, Jean-Pierre, F-01990 Chaneins (FR); PILON, Bruno, F-01660 Chaveyrat (FR)
(74) Mandataire: Lejeune, Benoit
(86) Numéro de dépôt international: FR9601941
(87) Numéro de publication internationale: WO97021586

(56) Documents cités:
- DE-C- 808 188
- FR-A- 1 237 527

## Description

L'invention concerne un axe de blocage rapide d'un élément sur un autre, et notamment d'une roue sur un cadre de cycle ou autre engin.

De tels axes de blocage sont utilisés de façon courante notamment pour pouvoir monter et démonter de façon très rapide une roue sur un cadre. Ils sont utilisés également dans le domaine du cycle par exemple pour immobiliser la tige de selle dans le tube de selle.

Les axes de blocage de roue connus comprennent une longue tige qui traverse le moyeu de la roue avec de chaque côté du moyeu une extrémité de tige en saillie. L'une des extrémités de la tige présente une première butée de serrage, généralement réglable le long de la tige. II s'agit habituellement d'un embout taraudé ou d'un écrou qui est vissé à l'extrémité filetée de la tige.

L'autre extrémité de la tige présente une seconde butée de serrage mobile, dont le mouvement le long de la tige est commandé par un levier articulé à l'extrémité de l'axe et portant une came excentrique. Le levier et sa came font varier la distance séparant les deux butées. Ils permettent en particulier de serrer d'un seul coup les deux pattes d'attache de la fourche entre les extrémités du moyeu et les butées de serrage.

Le levier et sa came excentrique exercent au niveau de la seconde butée un mouvement avec une composante axiale dirigée selon la direction générale de la tige, et une composante transversale dirigée perpendiculairement à l'axe de rotation du levier.

Certains axes de blocage présentent un levier dont l'oreille de manoeuvre est déportée radialement par rapport à l'axe de la tige. Ces axes présentent l'inconvénient que l'effort de fermeture du levier est appliqué dans un plan qui passe à côté de l'axe de la tige. L'axe de levier est de plus sollicité en torsion. II est donc nécessaire de le dimensionner largement. Globalement, un tel levier présente un rendement médiocre.

Pour certains axes de blocage aussi, l'axe du levier présente une forme de came excentrique qui circule dans un trou oblong. II y a une pression de contact très élevée entre la came et la paroi de l'oblong. II est donc nécessaire de choisir des matériaux très résistants.

Selon une construction décrite dans le brevet DE 808188, le levier a un orifice pour l'axe qui est de plus grand diamètre que celui de l'axe et qui est décentré par rapport à sa surface périphérique. La surface périphérique du levier porte sur une poutre de transfert intermédiaire entre le levier et une bague de serrage mobile. Ici encore la composante transversale est produite par la rotation de l'axe du levier dans son logement du levier et de ce fait il y a une pression de contact très élevée entre l'axe du levier et la paroi de l'orifice.

Pour d'autres axes de blocage, la composante transversale du mouvement de serrage décale radialement la seconde butée par rapport à l'axe de la tige. Au serrage, ce mouvement provoque ou bien un léger désaxement de la tige, ou bien un mouvement radial de la seconde butée par rapport à la patte d'attache de la fourche contre laquelle elle est appliquée. Quoiqu'il en soit, dans les deux cas, on ne maîtrise pas parfaitement la position des différents éléments au cours du serrage.

De plus, pour la plupart des axes de blocage, le serrage s'opère par une rotation de l'oreille du levier sur une amplitude angulaire de 180 degrés environ. La rotation de 180 degrés est avantageuse, car elle permet d'utiliser des cames de faible pente pour réaliser le mouvement axial. Ceci présente l'inconvénient que l'oreille du levier présente par rapport à la tige une position angulaire semblable en position fermée et en position ouverte. La forme propre du levier n'est pas toujours suffisante pour différencier ces deux positions, d'où un risque possible de rouler avec un levier en position ouverte, alors qu'on le croit en position fermée.

La position limite du levier à l'ouverture est le plus souvent définie par une mise en butée de l'excentrique dans son logement. De ce fait cette position n'est pas précise, et compte tenu de la différence de bras de levier entre le levier de manoeuvre et l'excentrique, il peut se produire une usure prématurée de l'excentrique si on a tendance à forcer sur le levier à l'ouverture.

Un but de l'invention est d'améliorer le mode de fonctionnement des axes de blocage existants, par un meilleur transfert des efforts, une meilleure répartition des différentes composantes de mouvement entre les différents éléments.

Un autre but de l'invention est de proposer un levier dont la position du levier révèle sans ambiguïté la position de blocage de la tige.

Ces buts et d'autres buts et avantages de l'invention qui apparaîtront au cours de la description qui va suivre sont atteints par l'axe de blocage tel qu'il est défini dans la revendication 1.

L'invention sera mieux comprise en se référant à la description ci-dessous et aux dessins en annexe qui en font partie intégrante.

La figure 1 représente en vue de face un axe de blocage selon un mode non limitatif de mise en oeuvre de l'invention.

La figure 2 représente l'axe de blocage de la figure 1 en coupe par un plan transversal.

La figure 3 représente l'axe de la figure 1 en vue de côté et en coupe par un plan transversal.

La figure 4 représente la poutre en perspective.

La figure 5 est une vue semblable à la figure 2, avec le levier en position ouverte.

La figure 6 illustre une variante de réalisation.

Les figures représentent un axe de blocage prévu pour l'assemblage d'une roue sur le cadre d'un cycle. Toutefois, il est entendu que l'invention peut trouver d'autres applications en tant que pièce de blocage sur un cycle.

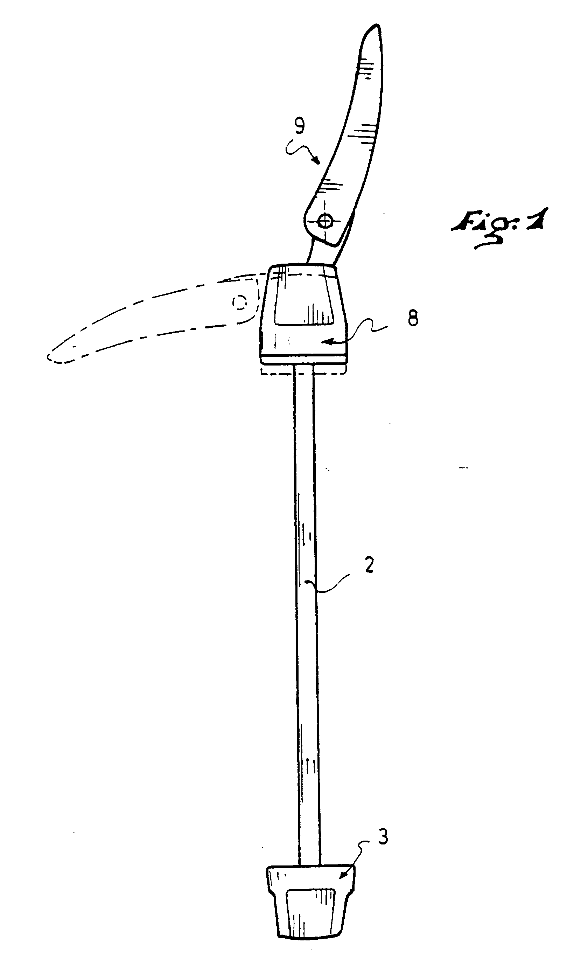

L'axe de blocage représenté en figure 1 comporte une tige 2 effilée qui définit une direction longitudinale. De façon connue, cette tige est prévue pour être engagée dans un orifice traversant de l'arbre central du moyeu.

La tige 2 présente à l'une de ses extrémités une première butée de serrage 3. La position de cette butée le long de la tige est de préférence réglable. Ainsi que cela est illustré, par exemple, la tige 2 présente une zone filetée à son extrémité, et la butée est un embout 4 taraudé qui est vissé sur cette partie filetée. De préférence, dans ce cas, un joint torique 5 fait office de frein entre le filet de la tige et l'embout. Le joint se trouve dans un logement épaulé de l'embou et il est retenu par une bague 6 qui est assemblée à l'embout par tout moyen approprié, par exemple vissage et collage. Naturellement, tout autre moyen approprié convient.

A l'autre extrémité de la tige 2 se trouve une seconde butée de serrage 8. De façon connue, cette seconde butée de serrage est mobile le long de la tige, et son déplacement est commandé par un levier de serrage 9. La seconde butée peut être déplacée entre une position de desserrage représentée dans la figure 1 en trait fort, et une position de serrage représentée dans la figure 1 en trait mixte. Le passage de l'une à l'autre position se fait par rotation du levier de serrage 9.

Le levier actionne le déplacement de la seconde butée 8 le long de la seconde extrémité de la tige par des moyens qui vont maintenant être décrits.

A sa seconde extrémité, la tige présente une chape 13 qui présente, vue de côté en section transversale une forme de U et dont la surface externe est inscrite dans un cylindre de révolution centré sur l'axe de la tige. Dans le mode de réalisation illustré, la chape 13 est partie intégrante de la tige. Ceci n'est pas limitatif, et la chape pourrait être une pièce usinée indépendamment de la tige et rapportée à son extrémité.

La seconde butée 8 présente une bague de serrage cylindrique 10 percée d'un orifice central 12. La bague de serrage 10 est montée coulissante le long des branches 13a et 13b de la chape. Elle présente sur l'extérieur de la chape une surface d'appui annulaire 14 qui forme une surface externe d'appui.

De préférence, la bague 10 présente une forme de cuvette dont l'ouverture est orientée vers le premier embout, et dont le rebord 15 forme une face de serrage. La bague 10 est retenue de préférence par un épaulement circulaire 16 qui se trouve à la base de la chape, et un ressort situé entre l'épaulement 16 et le fond de la cuvette.

Le contour de l'épaulement 16 est ajusté au diamètre intérieur de la cuvette. En outre, l'orifice central 12 de la bague est ajusté au diamètre extérieur de la chape 13. La bague 10 se trouve ainsi guidée selon une direction longitudinale.

Les branches 13a et 13b de la chape définissent entre elles un logement délimité par deux faces sensiblement parallèles.

Dans ce logement est engagé un basculeur 20 du levier 9. Le basculeur 20 est rotatif autour d'un axe transversal 21 porté par les deux branches 13a et 13b du basculeur. Le basculeur présente une épaisseur constante au moins dans sa zone comprise entre les deux branches de la chape 13. Cette épaisseur est sensiblement égale à la distance comprise entre les deux branches de la chape. Cette distance est voisine du diamètre de la tige.

Le basculeur 20 présente vers l'extérieur une branche 22 qui est prolongée par une oreille de manoeuvre 23. Dans le mode de réalisation représenté, l'oreille est un élément distinct du basculeur qui est enfilé sur la branche du basculeur et assemblé par une goupille, une vis ou tout autre moyen approprié, par exemple par clipage. De plus, un bloc 25 de matériau déformable est prévu entre le basculeur et l'oreille pour rattraper de façon élastique les jeux entre ces deux éléments.

Ce mode de construction permet avantageusement de choisir pour le basculeur et pour l'oreille des matériaux différents, et en particulier, il est possible de réaliser le basculeur en un matériau prévu pour supporter des contraintes de compression élevées et selon un mode de fabrication très simple. Par exemple, le basculeur, qui présente une épaisseur constante, est réalisé en acier inoxydable, par simple découpe d'une tôle, éventuellement traitée. L'oreille peut être réalisée par exemple en alliage léger ou en matière plastique.

De façon également avantageuse, l'axe 21 de rotation du basculeur est prévu pour être sollicité au cisaillement par le basculeur, et par réaction par les branches de la chape. Comme ces éléments sont juxtaposés, l'axe 21 travaille dans de bonnes conditions mécaniques, et il est possible pour cette raison de lui donner un diamètre relativement faible. II en résulte une réduction des frottements à ce niveau.

A l'opposé de la branche 22, c'est-à-dire dans la zone de la chape 13, le basculeur 20 présente une zone périphérique 28, excentrique qui est prévue pour agir comme une came. La distance entre la périphérie de la came et l'axe 21 augmente en correspondance depuis un premier secteur situé dans le prolongement de la branche jusqu'à un autre secteur situé approximativement à la perpendiculaire. Tout moyen approprié convient pour réaliser la came 28, par exemple une courbure variable, ou bien plusieurs courbures constantes successives, ou bien une seule courbure excentrée. On a obtenu de bons résultats avec une telle distance variant entre 4 et 5 millimètres environ, soit une course de 1 millimètre de distance sur un angle de 120 degrés approximativement de la came. Toutefois ces chiffres ne sont pas limitatifs.

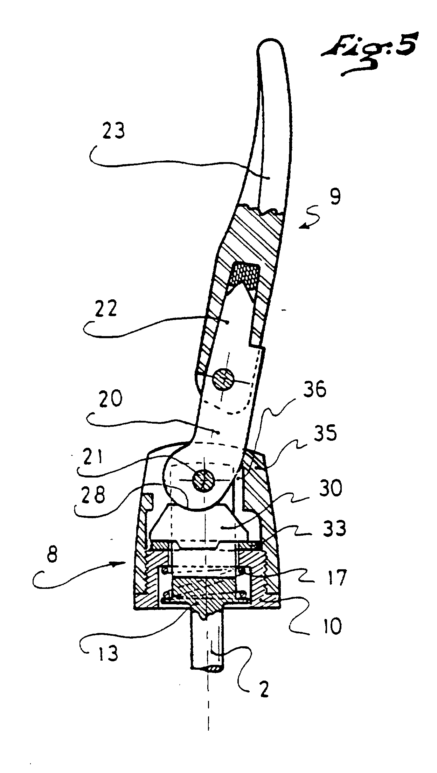

Une poutre 30 est située entre les branches de la chape 13, entre la came 28 du basculeur et la bague 10. Cette poutre qui est représentée en perspective en figure 4 présente en vue de face une forme globalement trapézoïdale, et une épaisseur constante sensiblement égale à l'épaisseur du basculeur. Sa partie supérieure 31 est incurvée. Elle est prévue pour servir de contre-appui à la came 28. Le rayon de courbure de cette partie est sensiblement constant et voisin du plus grand rayon de courbure de la came 28 ou légèrement supérieur pour permettre un léger fléchissement de la poutre et garder une surface d'appui quasi linéïque. Le fait d'avoir des rayons voisins permet avantageusement de réduire la pression de contact entre le basculeur et la poutre. De façon connue, cette pression dépend en effet de la différence de la courbure des éléments en contact.

La partie inférieure de la poutre 31 est prévue pour exercer un appui contre l'embout 10 selon la direction longitudinale de la tige. Dans le mode de réalisation représenté, cet appui s'opère par l'intermédiaire d'une rondelle 33 dont le diamètre intérieur est sensiblement égal au diamètre extérieur de la chape 13, et dont le diamètre extérieur est voisin du diamètre extérieur de la bague 10. La rondelle est un élément de pression, réalisé dans tout matériau approprié, par exemple en acier inoxydable. Grâce à la rondelle 33, la bague 15 peut être réalisée en alliage léger, par exemple en alliage d'aluminium.

La partie inférieure de la poutre présente trois parties successives, deux parties d'extrémité 32a et 32b prévues pour faire appui sur la rondelle 33 selon un diamètre de celle-ci, et une partie centrale 32c en saillie par rapport aux deux autres parties engagées à l'intérieur de la rondelle. Cette partie centrale présente une hauteur voisine de l'épaisse de la rondelle. Elle assure la mise en place correcte et le maintien de la poutre au dessus de la rondelle. De façon générale, la longueur de la poutre est inférieure au diamètre extérieur de la rondelle. En outre, sa partie centrafe présente une longueur nettement inférieure au diamètre interne de la rondelle, de telle façon que la poutre ait une liberté de mouvement transversal d'amplitude limitée le long d'un diamètre de la rondelle.

Le mouvement diamétral de la poutre est piloté par la came 28, au cours de la rotation du basculeur 20 autour de l'axe 21. C'est-à-dire qu'en pivotant autour de l'axe 21 sur un angle de l'ordre de 90 degrés, le basculeur provoque à la fois le déplacement axial de la poutre le long de la chape 13 sur une distance de l'ordre de 1 millimètre environ, et son déplacement transversal sur la rondelle 33. La liberté de mouvement transversal de la poutre permet d'avoir une partie supérieure 31 incurvée de courbure voisine de la courbure de la came.

La forme trapézoïdale de la poutre tient compte de la répartition du moment de flexion auquel la poutre est soumise. Ce moment est nul au niveau des extrémités et maximum au milieu de la poutre. La partie centrale 32c en saillie augmente la section de la poutre dans cette zone où le moment de flexion est maximum.

Avantageusement, la poutre peut être réalisée par découpe d'une tôle d'acier inoxydable, ou de tout autre matériau résistant au matage et à la flexion.

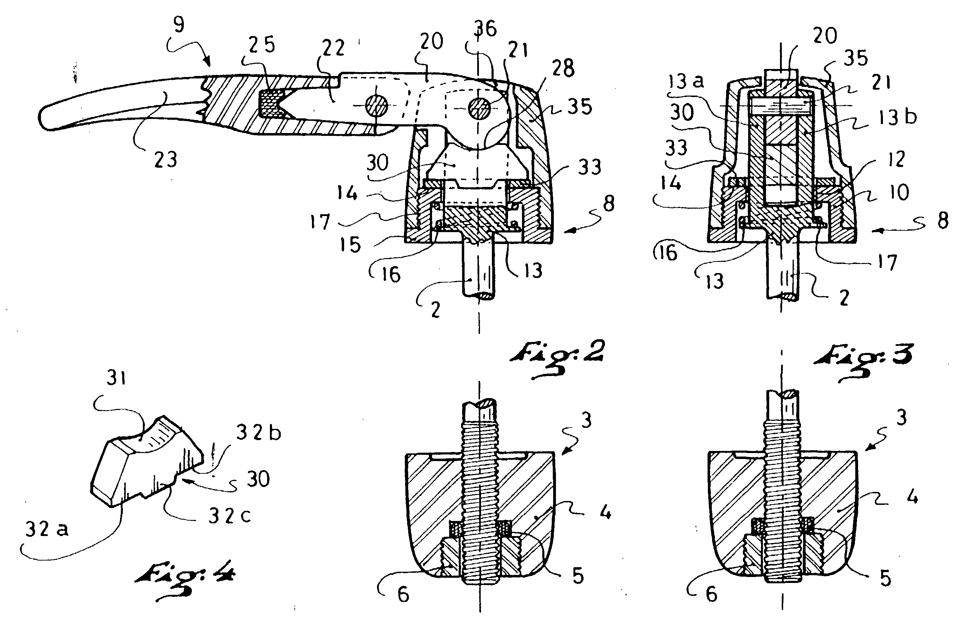

La figure 2 représente la seconde butée en position de serrage, c'est-à-dire que l'oreille de manoeuvre est approximativement orientée perpendiculairement à la tige, et c'est le secteur de la came 28 à plus grande distance de l'axe 31 qui exerce un appui sur la poutre 30. La poutre force la bague 10 à se rapprocher du premier embout 4 en prenant appui sur la seconde extrémité de la tige par l'intermédiaire du basculeur 20 et de l'axe 21. Avantageusement, dans cette position, la zone de contact entre la came 28 et la poutre 30 est centrée par rapport à l'axe de la tige 2. En outre, le rayon de courbure de la partie supérieure 31 de la poutre 30 est voisin du rayon du secteur actif de la came. Ainsi les efforts de serrage se répartissent de façon sensiblement symétrique par rapport à l'axe longitudinal de la tige 2. II faut noter également que le basculeur 20 est mobile dans un plan passant par l'axe. L'effort nécessaire pour amener le basculeur dans la position de serrage est donc situé entièrement dans ce plan.

La figure 5 représente la seconde butée en position de desserage. Dans cette position, l'oreille 23 et la branche 22 du basculeur 20 se trouvent approximativement dans le prolongement de la tige 2, mettant ainsi en contact avec la poutre 30 le secteur de plus petite distance par rapport à l'axe 21. Sous l'effet de rappel du ressort 17, la bague 10 s'est écartée de la première butée de serrage 3, du fait que la poutre 30 peut se rapprocher de l'axe 21. Le ressort 17 exerce également sur le basculeur 20 un moment de rappel élastique dans sa position de desserrage.

Pour compenser l'excentricité de la came 28, la poutre 30 s'est déplacée selon un diamètre de la rondelle 33. A titre indicatif, dans le mode de réalisation illustré, ce déplacement est de l'ordre de 1 millimètre. Ainsi, avantageusement, la composante longitudinale de mouvement, qui est nécessaire pour le serrage de la tige par l'excentrique, est ici assurée à l'intérieur même de la butée. Cette composante n'affecte ni la seconde bague de serrage, ni le levier.

Entre les deux positions de la figure 2 et de la figure 5, le levier a basculé sur une amplitude angulaire de l'ordre de 90 degrés approximativement, si bien qu'en position de desserrage, le levier 9 se trouve situé approximativement dans le prolongement de la tige 2. Un tel débattement angulaire de 90 degrés ou un peu plus qui est permis compte tenu du grand diamètre de la came est avantageux car il permet de différencier de façon évidente la position de desserrage par rapport à la position de serrage.

Dans le mode de réalisation illustré dans les figures, la butée de serrage 8 comprend de plus un cabochon 35 qui est vissé sur la paroi extérieure de la bague 10. Le cabochon présente une ouverture 36 que traverse le basculeur 20. L'ouverture est prévue pour permettre le débattement angulaire du levier 9, et de préférence pour définir de façon précise ses deux positions extrêmes, en particulier la position de desserrage où le levier 9 est rappelé par le ressort 17.

Selon un mode de réalisation particulier, le cabochon 35 présente le long de sa paroi interne deux rainures dans lesquelles les extrémités de la poutre sont guidées. La poutre et la chape sont ainsi solidaires du cabochon en rotation autour de l'axe de la tige, et seules la bague 10 et la rondelle peuvent tourner. D'autres moyens ayant le même effet peuvent aussi convenir.

L'assemblage des différents éléments de la butée 8 se fait de la façon suivante. Le ressort 17 et la bague 10 sont enfilés sur la chape 13. La poutre 30, le basculeur 20 et l'axe 21 sont ensuite mis en place entre les branches de la chape. Le cabochon est présenté sur le basculeur, et il est vissé sur la bague 10 par rotation de celle-ci. En effet, la poutre et la tige ne tournent pas par rapport au cabochon au cours du vissage. Enfin, l'oreille de manoeuvre 23 est assemblée à l'extrémité du basculeur 20.

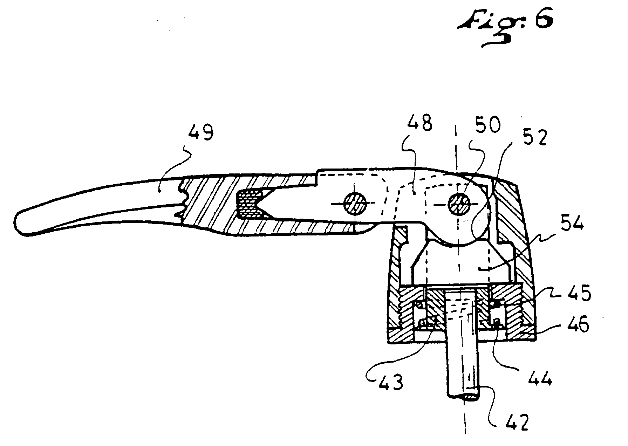

La figure 6 représente une variante de réalisation de la seconde butée de serrage.

Selon cette variante, la chape 43 est un élément indépendant assemblé à l'extrémité de la tige 42. Comme dans le cas précédent, la base de la chape présente un épaulement 44. Une bague 46 est engagée sur la chape 43, et elle est renvoyée élastiquement vers l'extrémité de la tige par un ressort 45.

Un basculeur 48 prolongé d'une oreille de manoeuvre 49 est articulé entre les branches de la chape autour d'un axe 50. Le basculeur présente en outre une came 52 qui est en appui contre une poutre 54. La poutre 54 présente ici une base rectiligne, dont les deux parties d'extrémité sont en appui directement sur la bague 46.

Le fonctionnement de cette butée est semblable à celui de la butée précédente, et son montage se déduit facilement de ce qui a été décrit précédemment.

Naturellement, l'invention n'est pas limitée aux différents modes de réalisation qui ont été décrits, et des variantes de réalisation sont possibles.

Notamment, le levier pourrait être construit de façon différente, par exemple en une seule pièce, avec une ouverture du cabochon prévue pour le passage d'un tel levier.

Au lieu d'être assemblé à la bague, le cabochon pourrait être assemblé à l'extrémité de la tige, par exemple par l'intermédiaire de l'axe, et coulisser le long de la bague en même temps que la bague coulisse le long de la chape.

Les face internes des bagues de serrage peuvent être pourvues de tout moyen approprié, par exemple des stries en relief, dans le but d'améliorer l'adhérence de ces bagues contre les surface à serrer.

Dans le cas d'une tige de blocage rapide pour une roue, on peut également ajouter de chaque côté du moyeu un petit ressort qui assure une position centrée de la tige par rapport au moyeu en particulier dans la position desserrée de la tige. Ces ressorts facilitent la mise en place du moyeu et de la tige dans les pattes d'attache du cadre, et leur dégagement.

Le débattement angulaire du levier n'est pas non plus limitatif. Selon l'invention, on préfère un débattement de l'ordre de 90 à 120 degrés pour bien différencier les positions de blocage de l'axe. Des débattements supérieurs à 120 degrés ou le cas échéant inférieurs à 90 degrés peuvent naturellement convenir.

D'autres variantes de construction sont encore possibles sans pour autant sortir du cadre de l'invention telle que définie dans les revendications.

Enfin, comme cela a été dit au début de la description, l'invention peut trouver d'autre applications que les tiges de blocage rapide de roue, et notamment les tiges de blocage de la tige de selle dans le tube de selle, ou d'une façon générale les tiges de serrage rapide d'un collier.

## Revendications

1. Axe de blocage rapide comprenant une tige longitudinale (2, 42), une première butée de serrage (3) à une extrémité de la tige, une seconde butée de serrage (8) à la seconde extrémité de la tige ayant une chape (13, 43) située à l'extrémité de la tige et présentant deux branches (13a, 13b), une bague de serrage (10) mobile engagée sur la seconde extrémité de la tige, avec une surface interne de serrage (15) orientée vers la première butée et une surface externe d'appui (14) orientée vers l'autre côté, un levier (9) monté articulé autour d'un axe (21) à la seconde extrémité de la tige au-delà de la bague de serrage, l'axe de basculement dudit levier (9) étant porté par la chape (13, 43), le levier (9) ayant un basculeur (20) avec une zone périphérique (28) en appui contre la surface de contre-appui incurvée d'une poutre (30, 54) située à l'intérieur des branches latérales (13a, 13b) de la chape (13, 43) entre la came et la bague de serrage, **caractérisé par le fait que** la zone périphérique (28) du basculeur (20) est excentrée à la manière d'une came par rapport à l'axe (21) de rotation du levier et que la poutre (30, 54) est montée sur la bague de serrage avec un jeu transversal, son mouvement transversal lui étant imprimé par la rotation du levier autour de son axe.

2. Axe selon la revendication 1, **caractérisé par le fait que** le levier (9) comprend un basculeur (20, 48) de faible épaisseur qui est engagé entre les branches de la chape (13).

3. Axe selon la revendication 2, **caractérisé par le fait que** la came s'étend sur le basculeur (20, 48) entre deux secteurs situés approximativement à angle droit l'un par rapport à l'autre, de façon à définir une position de serrage et une position de desserrage du levier (9) distantes angulairement de 90 degrés approximativement .

4. Axe selon la revendication 1, **caractérisé par le fait que** la bague de serrage est engagée et guidée le long des branches (13a, 13b) de la chape (13).

5. Axe selon la revendication 4, **caractérisé par le fait que** la base de la chape (13) présente un épaulement (16) et qu'un ressort de rappel (17) est situé entre l'épaulement et la bague de serrage.

6. Axe selon la revendication 1, **caractérisé par le fait que** la poutre (30, 54) présente une partie incurvée (31) du côté de la came (28) du levier.

7. Axe selon la revendication 6, **caractérisé par le fait que** la courbure de la partie incurvée (31) de la poutre (30, 54) est voisine de la courbure de la came (28, 52).

8. Axe selon la revendication 1, **caractérisé par le fait que** la poutre présente vue de face une forme globalement trapézoïdale.

9. Axe selon la revendication 1, **caractérisé par le fait qu'**une rondelle de compression est intercalée entre la poutre (30) et la bague de serrage (10).

10. Axe selon la revendication 8, **caractérisé par le fait que** la base de la poutre (30) présente trois parties, deux parties d'appui (32a, 32b) situées aux extrémités, et une partie centrale (32c) en saillie.

## Patentansprüche

1. Schnellblockier-Welle aufweisend einen longitudinalen Schaft (2, 42), einen ersten Spannanschlag (3) an einem Ende des Schaftes, einen zweiten Spannanschlag (8) an dem zweiten Ende des Schaftes, wobei sie einen Gabelkopf (13, 43) aufweist, der an dem Ende des Schaftes angeordnet ist und zwei Äste (13a, 13b) aufweist, ein Spannring (10), der beweglich in Eingriff ist auf dem zweiten Ende des Schaftes mit einer inneren Spann-Oberfläche (15), die in Richtung zu dem ersten Anschlag orientiert ist und eine äußere Abstütz-Oberfläche (14), welche in Richtung zur anderen Seite orientiert ist, ein Hebel (9), der angelenkt um eine Achse (21) montiert ist an dem zweiten Ende des Schafts oberhalb des Spannrings, wobei die Schwenkachse des Hebels (9) durch den Gabelkopf (13, 43) getragen ist, wobei der Hebel (9) einen Kipper (20) aufweist mit einer peripheren Zone (28) in Abstützung gegen die Oberfläche der Gegen-Abstützung, die gekrümmt ist, eines Trägers (30, 54), der im Innern der seitlichen Äste (13a, 13b) des Gabelkopfs (13, 43) zwischen der Nocke und dem Spannring angeordnet ist, **dadurch gekennzeichnet, dass** die periphere Zone (28) des Kippers (20) in der Weise einer Nocke in Bezug auf die Rotationsachse (21) des Hebels exzentriert ist und dass der Träger (30, 54) auf dem Spannring mit einem transversalen Spiel montiert ist, wobei seine transversale Bewegung ihm durch die Drehung des Hebels um seine Achse auferlegt wird.

2. Welle nach Anspruch 1, **dadurch gekennzeichnet, dass** der Hebel (9) einen Kipper (20, 48) geringer Dicke aufweist, welcher in Eingriff ist zwischen den Ästen des Gabelkopfs (13).

3. Welle nach Anspruch 2, **dadurch gekennzeichnet, dass** die Nocke sich über den Kipper (20, 48) zwischen zwei Sektoren erstreckt, die in etwa im rechten Winkel zueinander angeordnet sind in einer Weise, um eine Spannposition und eine Entspannungsposition des Hebels (9) zu definieren, die winkelmäßig um etwa 90° beabstandet ist.

4. Welle nach Anspruch 1, **dadurch gekennzeichnet, dass** der Spannring in Eingriff and geführt ist entlang der Äste (13a, 13b) des Gabelkopfs (13).

5. Welle nach Anspruch 4, **dadurch gekennzeichnet, dass** die Basis des Gabelkopfs (13) eine Schulter (16) aufweist und dass eine Rückstellfeder (17) zwischen der Schulter und dem Spannring angeordnet ist.

6. Welle nach Anspruch 1, **dadurch gekennzeichnet, dass** der Träger (30, 54) einen gekrümmten Teil (31) aufweist auf der Seite der Nocke (28) des Hebels.

7. Welle nach Anspruch 6, **dadurch gekennzeichnet, dass** die Krümmung des gekrümmten Teils (31) des Trägers (30, 54) in der Nähe der Krümmung der Nocke (28, 52) ist.

8. Welle nach Anspruch 1, **dadurch gekennzeichnet, dass** der Träger in Draufsicht eine im Wesentlichen trapezförmige Form aufweist.

9. Welle nach Anspruch 1, **dadurch gekennzeichnet, dass** eine Kompressions-Unterlegscheibe zwischen dem Träger (30) und dem Spannring (10) zwischengeschaltet ist.

10. Welle nach Anspruch 8, **dadurch gekennzeichnet, dass** die Basis des Trägers (30) drei Teile aufweist, zwei Abstützteile (32a, 32b), die an den Enden angeordnet sind und einen zentralen Teil (32c) in Vorsprung.

## Claims

1. Quick locking pin including a longitudinal rod (2, 42), a first tightening stop (3) at one end of the rod, a second tightening stop (8) at the second end of the rod having a cap (13, 43) located at the end of the rod and having two arms (13a, 13b), a movable tightening ring (10) engaged on the second end of the rod, with an internal tightening surface (15) oriented toward the first stop, and an external support surface (14) oriented toward the other side, a lever (9) mounted and journaled about an axis (21) at the second end of the rod beyond the tightening ring, the tilting axis of said lever (9) being borne by the cap (13, 43), the lever (9) having a rocker (20) with a peripheral zone (28) taking support against the curved surface of counter-support of a beam (30, 54) located within the lateral arms (13a, 13b) of the cap (13, 43) between the cam and the tightening ring, **characterized in that** the peripheral zone (28) of the rocker (20) is off-centered in the manner of a cam with respect to the rotational axis (21) of the lever and that the beam (30, 54) is mounted on the tightening ring with a transverse clearance, its transverse movement being imposed on it by the rotation of the lever about its axis.

2. Pin according to claim 1, **characterized in that** the lever (9) includes a thin rocker (20, 48) that is engaged between; the arms of the cap (13),

3. Pin according to claim 2, **characterized in that** the cam extends on the rocker (20, 48) between two sectors located approximately at right angle with respect to one another, so as to define a tightening position and a loosening position of the lever (9), angularly spaced by approximately 90 degrees.

4. Pin according to claim 1, **characterized in that** the tightening ring is engaged and guided along the arms (13a, 13b) of the cap (13).

5. Pin according to claim 4, **characterized in that** the base of the cap (13) has a shoulder (16), and that a return spring (17) is located between the shoulder and the tightening ring.

6. Pin according to claim 1, **characterized in that** the beam (30, 54) has a curved portion (31) on the side of the cam (28) of the lever.

7. Pin according to claim 6, **characterized in that** the curvature of the curved portion (31) of the beam (30, 54) is close to the curvature of the cam (28, 52).

8. Pin according to claim 1, **characterized in that** the bearn, seen from the front, has a generally trapezoidal shape.

9. , Pin according to claim 1, **characterized in that** a compression washer is inserted between the beam (30) and the tightening ring (10).

10. Pin according to claim 8, **characterized in that** the base of the beam (30) has three portions, two support portions (32a, 32b) located at the ends, and a projecting central portion (32c).
